# EUROPÄISCHE PATENTSCHRIFT

(11) **EP 0 492 223 B1**
(45) Veröffentlichungstag und Bekanntmachung des Hinweises auf die Patenterteilung: **24.07.1996**
(21) Anmeldenummer: 91120995.5
(22) Anmeldetag: 06.12.1991
(51) Int. Cl.: C09C 3/12, C09C 1/36, C08K 9/06

(54) **Silanisierte Pigmente und deren Verwendung zur Vergilbungsinhibierung von pigmentierten Kunststoffen**
Silanised pigments and their use in inhibiting yellowing of pigmented plastics
Pigments traités par un silane et leur utilisation dans l'inhibition du jaunissement de matières plastiques pigmentées

(30) Priorität: 22.12.1990 DE 4041663
(43) Veröffentlichungstag der Anmeldung: 01.07.1992
(73) Patentinhaber: MERCK PATENT GmbH, D-64271 Darmstadt (DE)
(72) Erfinder: Dietz, Johann, Dr., W-6050 Dietzenbach (DE); Kieser, Manfred, Dr., W-6100 Darmstadt (DE); Iwasa, Kazuhisa, Izumi-machi, Iwaki-shi, 970-04 (JP)

(56) Entgegenhaltungen:
- WO-A-90/02779
- GB-A- 1 376 706
- US-A- 4 271 234
- WORLD PATENTS INDEX LATEST Derwent Publications Ltd., London, GB; AN 82-27612E/
- WORLD PATENTS INDEX LATEST Derwent Publications Ltd., London, GB; AN 88-094543/

## Beschreibung

Die Erfindung betrifft silanisierte Pigmente, die Verwendung silanisierter Pigmente zur Vergilbungsinhibierung von Kunststoffen sowie Kunststoffsysteme, enthaltend silanisierte Pigmente.

Technisch verwendbare Kunststoffe enthalten zur Verbesserung der Eigenschaften in der Regel eine Reihe von Zusatzstoffen wie z. B. Weichmacher, Füllstoffe, Stabilisatoren und Alterungsschutzmittel, Gleit- und Trennmittel, Antistatika, Farbmittel sowie weitere Zusatzstoffe.

Dabei wird häufig insbesondere zwischen Farbmitteln einerseits und Stabilisatoren und Alterungsschutzmitteln andererseits eine unerwünschte Wechselwirkung beobachtet, die vermutlich darin besteht, daß die Stabilisator- und/oder Alterungsschutzmittelmoleküle zu der Oberfläche der Pigmentteilchen diffundieren und dort zu einer Vergilbungsreaktion führen, die vielfach auch im Dunkeln abläuft. Diese Vergilbungsreaktion führt insbesondere bei Pigmenten mit hellem Farbton zu unschönen Effekten und beeinträchtigt erheblich den ästhetischen Eindruck des Kunststoffsystems.

Die Aufgabe der vorliegenden Erfindung bestand in der Bereitstellung von silanisierten Pigmenten, die bei einer Verwendung in Kunststoffsystemen auch über längere Zeit nicht zu Vergilbungsreaktionen führen. Weiterhin sollten mit der vorliegenden Erfindung farbstabile Kunststoffsysteme angegeben werden.

Es wurde gefunden, daß diese Aufgaben durch die Bereitstellung der erfindungsgemäßen Pigmente gelöst werden können, welche mit einem Silan der Formel I

SiR¹R²R³R⁴ I

beschichtet sind, worin
mindestens einer der Reste R¹, R², R³ oder R⁴ Halogen oder Alkoxy mit 1-20 C-Atomen, worin auch eine oder 2 nicht benachbarte -CH₂-Gruppen durch -CH=CH-, -O-, -COO- oder -OCO- ersetzt werden können,
mindestens ein anderer der Reste R¹, R², R³ oder R⁴ Alkyl mit 10 - 30 C-Atomen, worin auch eine oder 2 nicht benachbarte CH₂-Gruppen durch -HC=CH- undloder -O- ersetzt sein können, und
die beiden anderen Reste jeweils unabhängig voneinander Halogen oder Alkyl- oder Alkoxy mit 1 - 30 C-Atomen, worin auch eine oder 2 nicht benachbarte -CH₂-Gruppen durch -CH=CH, -O-, -CO-, -COO- oder -OCO- ersetzt sein können,
bedeuten,

Gegenstand der Erfindung sind Perlglanzpigmente, welche mit einem Silan der Formel I beschichtet sind. Gegenstand der Erfindung ist weiterhin die Verwendung erfindungsgemäßer Pigmente zur Vergilbungsinhibierung in Kunststoffen. Gegenstand der Erfindung sind weiter farbstabile Kunststoffsysteme, enthaltend erfindungsgemäße Pigmente sowie ein neues Verfahren zur Herstellung der erfindungsgemäßen Pigmente.

Die Beschichtung von silikatischen Füllstoffen, TiO₂-Pigmenten, Al₂O₃-Pigmenten und Eisenpigmenten mit Organosilanen ist aus der JP-A-57 036156, WO-A-90/02779, JP-A-63 043976, US 4,271,234 und GB-A-1376706 bekannt. Die Oberflächenmodifizierung von Perlglanzpigmenten mit einem Silan der Formel I wird dort aber nicht beschrieben.

Durch die Beschichtung der Pigmente mit Silanen der Formel I wird offenbar die Diffusion der Stabilisator- und/oder Alterungsschutzmittelmoleküle wirksam unterdrückt und durch die Verwendung derartiger oberflächenmodifizierter Pigmente erhält man auch über längere Zeit farbstabile und vergilbungsresistente Kunststoffsysteme.

Die Vergilbungsreaktion macht sich besonders nachteilig bemerkbar bei Weißpigmenten wie z. B. Titandioxid, Zinkoxid, Zinksulfid, Lithoponen, Aluminiumsilikat, Bariumsulfat oder Calciumcarbonat, weiter auch bei silberweißen Perlglanzpigmenten wie z. B. bei mit einer dünnen Titandioxidschicht von etwa 40 nm oder weniger beschichteten Glimmerplättchen oder auch bei anderen weißen Perlglanzpigmenten, weiter auch bei weißen Metalleffektpigmenten oder Leuchtpigmenten. Weißpigmente, welche mit Silanen der Formel I beschichtet sind, sind besonders bevorzugt.

Daneben werden auch Buntpigmente mit hellem Farbton wie z. B. orange, rote, hellgrüne, hellblaue oder hellbraune Pigmente, bei denen die Vergilbungsreaktion ebenso eine deutliche Beeinträchtigung von Farbe und Farbklarheit bewirkt, vorteilhaft mit Silanen der Formel I beschichtet.

Besonders bevorzugt ist weiterhin auch die Beschichtung nicht-weißer Perlglanz- und Effektpigmente, da die Vergilbungsreaktion zu einer Beeinträchtigung des farbgebenden bzw. farbunterstützenden Effekts (Interferenzeffekt, Spiegeleffekt) und damit zu einer erheblichen Verschlechterung der eigentlich gewünschten Farbwirkung führt

Es hat sich gezeigt, daß die Stabilisator- undloder Alterungsschutzmittelmoleküle vielfach reaktiv an die Pigmentoberfläche gebunden werden, wobei ihre Molekülstruktur häufig so verändert wird, daß sie ihre eigentliche Funktion, die i.a. in einer Erhöhung der Stabilität gegenüber der Einwirkung von Luftsauerstoff, Wärme und Licht besteht, nicht mehr in ausreichendem Maße erfüllen können. Demgegenüber ist die Wechselwirkung vieler Stabilisatoren und Alterungsschutzmittel mit Silanen der Formel I weniger stark und vielfach offenbar auch rein sterischer Natur, so daß die Wirkungsweise der Stabilisator- und Alterungsschutzzusätze häufig kaum oder gar nicht beeinträchtigt wird. Daher ist auch die Beschichtung von Schwarzpigmenten oder anderen Pigmenten mit dunkler Farbe mit Silanen der Formel I sinnvoll und bevorzugt, da dadurch häufig eine Verbesserung der Langzeitstabilität des pigmentierten Kunststoffsystems erzielt werden kann.

In den Silanen der Formel I bedeutet mindestens einer der Reste R¹, R², R³ und R⁴ vorzugsweise Halogen oder Alkoxy mit 1-20 C-Atomen und insbesondere 1-10 C-Atomen, worin auch eine oder 2 nicht benachbarte -CH₂-Gruppen durch -CH=CH-, -O-, -CO-, -COO- oder -OCO- ersetzt sein können. Da über diesen Rest i.a. eine physisorptive oder insbesondere auch chemisorptive Wechselwirkung zwischen der Pigmentoberfläche und den Silanen der Formel I vermittelt wird, soll dieser Rest im folgenden auch als BV-Rest bezeichnet werden. Der BV-Rest bedeutet besonders bevorzugt Halogen oder eine Alkoxygruppe mit 1-10 C-Atomen und ganz besonders bevorzugt Fluor, Chlor Methoxy, Ethoxy, Propoxy, Butoxy, Pentoxy, Hexoxy, Heptoxy, Octoxy, Nonoxy oder Decoxy.

Weiterhin bedeutet mindestens ein anderer der Reste R¹, R², R³ und R⁴ Alkyl mit 10-30 C-Atomen, worin auch eine oder 2 nicht benachbarte CH₂-Gruppen durch -HC=CH- undloder -0- ersetzt sein können. Obwohl auch über diesen Rest in weniger häufigen Fällen insbesondere eine physisorptive Wechselwirkung zwischen Pigmentoberfläche und Silanen der Formel I zustande kommen kann, u.z. insbesondere, wenn dieser Rest Oxaalkyl, Alkenylalkyl oder Oxaalkenylalkyl bedeutet, soll dieser Rest im Unterschied zum BV-Rest im folgenden auch als NBV-Rest bezeichnet werden. Der NBV-Rest bedeutet ganz besonders bevorzugt Decyl, Undecyl, Dodecyl, Tridecyl, Tetradecyl, Pentadecyl, Hexadecyl, Heptadecyl, Octadecyl, Nonadecyl, Eicosanyl, Heneicosanyl, Docosanyl, Tricosanyl, Tetracosanyl, Pentacosanyl, Hexacosanyl, Heptacosanyl, Octacosanyl, Nonacosanyl, Triacontanyl, 12,12-Dimethyltetradecyl, 12-Methyl-12-ethyltetradecyl, 12,12-Dipropyltetradecyl, 11-Propyl-12-butylpentadecyl und 8,8-Dimethyl-12-propyl-13-propylhexadecyl.

Die beiden anderen Reste können die bei dem BV-Rest bzw. NBV-Rest angegebene Bedeutung haben. Die Bindung des Silans der Formel I an die Pigmentoberfläche kann durch Physisorption oder Chemisorption erfolgen. Bei der Physisorption handelt es sich i.a. um van-der-Waalsche Wechselwirkungen zwischen der polaren Pigmentoberfläche und polaren Gruppen der BV- und NBV-Reste und insbesondere der BV-Reste. Bei der chemisorptiven Wechselwirkung werden i.a. eine oder mehrere insbesondere der BV-Reste hydrolytisch gespalten und es bilden sich eine oder mehrere Bindungen auf der Silan-Pigmentoberfläche aus. Erfindungsgemäße Pigmente, bei welchen die Silanverbindungen der Formel I chemisorptiv angelagert sind, weisen i.a. eine höhere Stabilität auf und sind daher gegenüber Pigment-Silan-Komplexen, welche durch eine physisorptive Wechselwirkung stabilisiert sind, i.a. bevorzugt. Da es i.a. erwünscht ist, daß zur Erhöhung der Stabilität des Komplexes Pigment-Silan nicht nur 1, sondern 2 oder sogar 3 insbesondere chemisorptive Bindungen ausgebildet werden, weisen die Silane der Formel I vorzugsweise 2 und insbesondere 3 BV-Reste auf. Um eine sterische Behinderung der Ausbildung von 2 oder 3 Bindungen zwischen Pigment und Silan zu vermeiden, werden bevorzugt solche Silane der Formel I verwendet, bei denen die Kettenlängen der beiden oder 3 BV-Reste vergleichbar sind und sich insbesondere nicht um mehr als 2 -CH₂-Gruppen voneinander unterscheiden. Ganz besonders bevorzugt sind Silane mit 2 oder 3 BV-Resten, von denen mindestens 2 identisch sind. Weiterhin bevorzugt sind solche Silane der Formel I, die 3 BV-Reste mit Kettenlängen von weniger als 6 C-Atomen aufweisen. Ganz besonders bevorzugt sind Silane der Formel I, welche 3 BV-Reste enthalten, die alle Methoxy oder Ethoxy bedeuten.

Die Silane der Formel I können 1 - 3, insbesondere jedoch nicht mehr als 2 und ganz besonders nur 1 NBV-Rest enthalten. Mindestens einer der NBV-Reste bedeutet vorzugsweise eine relativ langkettige Alkyl-Gruppe mit einer Kettenlänge von mehr als 10 C-Atomen. Dieser NBV-Rest dient zum einen zur Verankerung des Pigment-Silan-Komplexes in dem Kunststoffsystem; zum anderen weist dieser NBV-Rest relativ weit von der Oberfläche des Pigment-Silan-Komplexes weg und stellt somit eine erste Barriere für das andiffundierende Stabilisator- bzw. Alterungsschutzmittelmolekül dar. Zur Erhöhung der sterischen Hinderung kann dieser NBV-Rest insbesondere am nach außen weisenden Kettenende auch verzweigt sein; Silane der Formel I, enthaltend einen derartigen verzweigten NBV-Rest, sind bevorzugt. Ganz besonders bevorzugt sind Silane mit einem NBV-Rest, der C₁₆H₃₁ oder C₁₈H₃₃ bedeutet. Enthält das Silan mehr als einen NBV-Rest, so sind die zusätzlichen NBV-Reste vorzugsweise kurzkettigere Alkylketten mit Kettenlängen zwischen 1 und 15 C-Atomen, die verzweigt oder unverzweigt sein können.

Silane der Formel I sind entweder bekannt oder können nach an sich bekannten Verfahren, wie sie etwa in Standardwerken der anorganischen Chemie (s. z. B. Holleman-Wiberg, Lehrbuch der anorganischen Chemie, Berlin 1976, S. 555 oder R. Steudel, Chemie der Nichtmetalle, Berlin 1974, S. 426) angegeben sind, hergestellt werden. Daneben können auch weitere, dort nicht explizit erwähnte Verfahren benutzt werden.

Die Beschichtung der Pigmente mit den Silanen der Formel I erfolgt vorzugsweise nach einem neuen und sehr einfachen Verfahren, das ebenfalls Gegenstand dieser Erfindung ist. Dazu werden die Pigmente und das Silan trocken, d.h. ohne Lösungsmittelzusatz oder Zusatz anderer Stoffe wie Kopplungsreagenzien, Trägerflüssigkeiten etc., vorzugsweise bei Temperaturen zwischen 50-100 °C intensiv z. B. in einem Intensivmischer gemischt; die Rührgeschwindigkeit liegt typischerweise zwischen 10-10000 rpm. Die Mischungsdauer beträgt in den seltenen Fällen mehr als 1 Stunde. Ein weiteres Aufarbeiten des Gemisches ist i.a. nicht erforderlich, aber, falls gewünscht, möglich.

Daneben können die Pigmente z. B. auch in organischen Lösungsmitteln suspendiert mit den Silanen der Formel I umgesetzt werden, wie dies z. B. in DE 25 43 962 oder JP 49-099328 beschrieben ist. Hier ist im Anschluß an die Abtrennung des Lösungsmittels eine Wärmebehandlung des beschichteten Pigments bei z. B. 50 - 200 °C erforderlich.

Der Massenanteil des Silans, bezogen auf die Oberfläche des beschichteten Pigments, liegt typischerweise zwischen 0,0001g/m² und 0,1 g/m² und insbesondere zwischen 0,001 und 0,07 g/m². Besonders gute Ergebnisse wurden für Silankonzentrationen zwischen 0,002 und 0,004 g/m² erhalten.

Die mit Silanen der Formel I reaktiv beschichteten Pigmente weisen gute mechanische Eigenschaften auf (z. B. keine Neigung zur Agglomeratbildung, gute Dispergierbarkeit), sodaß ihre Einarbeitung in verschiedenartigste Kunststoffsysteme unproblematisch ist und nach herkömmlichen Verfahren erfolgen kann. Erfindungsgemäße Systeme, welche auf thermoplastischen Polymeren oder Elastomeren basieren, sind bevorzugt; besonders bevorzugt sind Kunststoffsysteme auf Basis von Polyethylen, Polypropylen, Polyvinylchlorid, Polyamiden, Polycarbonaten und Polyacrylaten. Aber auch in duroplastischen Systemen wie z. B. Epoxyharzen und insbesondere auch Phenolharzen kann durch Verwendung von mit Silanen der Formel I reaktiv beschichteten Pigmenten eine deutliche Erhöhung der Farblangzeitstabilität erzielt werden.

Durch die Verwendung der mit Silanen beschichteten Pigmente gelingt eine wirksame Unterdrückung der Vergilbungsreaktion in Kunststoffsystemen. Diese Vergilbungsinhibierung wurde in Anwesenheit aller üblichen Stabilisatoren und Alterungsschutzmittel beobachtet; ganz besonders eindrucksvolle Ergebnisse wurden jedoch in Systemen erhalten, in denen phenolische Antioxidanten und Alterungsschutzmittel enthalten sind.

Die folgenden Beispiele sollen die Erfindung erläutern, ohne sie jedoch zu begrenzen.

### Vergleichsbeispiel

8 kg eines TiO₂-Pigments werden bei 80 °C mit 160 g C₁₆H₃₃Si(OEt)₃ 10 Minuten intensiv gemischt (Lädige-Mischer, 270 rpm). Eine weitere Aufarbeitung des beschichteten Pigments ist nicht erforderlich.

Um nachzuweisen, daß das beschichtete Pigment im Dunkeln vergilbungsresistent ist, wird in einem Modellversuch 1 g des beschichteten Pigments zu 5 ml einer 1 %igen Lösung von Propylgallat im Dunkeln hinzugefügt; es wird keine Dunkelvergilbung beobachtet.

Das beschichtete Pigment und unbeschichtetes TiO₂-Pigment werden jeweils in ein Polyethylen-Kunststoffsystem eingearbeitet, wobei das mit dem erfindungsgemäßen Pigment versetzte System eine deutlich geringere Dunkelvergilbung zeigt als das mit dem herkömmlichen unbeschichteten TiO₂-Pigment versetzte System. Es werden folgende CIE-Farbkoordinaten für die beiden Systeme gemessen.

| | herkömmliches System | erfindungsgemäßes System |
|---|---|---|
| L* | 69,2 | 76,1 |
| a* | 2,3 | 1,4 |
| b* | 10,8 | 6,9 |

## Patentansprüche

1. Perlglanzpigmente, welche mit einem Silan der Formel I
SiR¹R²R³R⁴ I
beschichtet sind, worin
mindestens einer der Reste R¹, R², R³ oder R⁴ Halogen oder Alkoxy mit 1-20 C-Atomen, worin auch eine oder 2 nicht benachbarte -CH₂-Gruppen durch -CH=CH-, -O-, -COO- oder -OCO- ersetzt werden können,
mindestens ein anderer der Reste R¹, R², R³ oder R⁴ Alkyl mit 10 - 30 C-Atomen, worin auch eine oder 2 nicht benachbarte CH₂-Gruppen durch -HC=CH- und/oder -O- ersetzt sein können, und
die beiden anderen Reste jeweils unabhängig voneinander Halogen oder Alkyl- oder Alkoxy mit 1 - 30 C-Atomen, worin auch eine oder 2 nicht benachbarte -CH₂-Gruppen durch -CH=CH, -O-, -CO-, -COO- oder -OCO- ersetzt sein können,
bedeutet.

2. Perlglanzpigmente nach Anspruch 1, dadurch gekennzeichnet, daß sie eine Titandioxidschicht aufweisen.

3. Perlglanzpigmente nach Anspruch 1, dadurch gekennzeichnet, daß der Massenanteil des Silans bezogen auf die Oberfläche des Pigments zwischen 0,0001 g/m² und 0,1 g/m² liegt.

4. Kunststoffsystem, enthaltend mit Silanen der Formel I beschichtete Perlglanzpigmente zur Vergilbungsinhibierung.

5. Verfahren zur Herstellung von mit Silanen der Formel I beschichteten Perlglanzpigmenten dadurch gekennzeichnet, daß das anorganische Perlglanzpigment mit einem oder mehreren Silanen der Formel I ohne Lösungsmittelzusatz oder andere Zusätze gemischt wird.

6. Verwendung von Perlglanzpigmenten, welche mit Silanen der Formel I beschichtet sind, zur Vergilbungsinhibierung in Kunststoffen.

## Claims

1. Pearl lustre pigments which are coated with a silane of the formula I
SiR¹R²R³R⁴ I
wherein
at least one of the radicals R¹, R², R³ or R⁴ is halogen or alkoxy having 1 - 20 C atoms, wherein one or 2 non-adjacent -CH₂- groups can also be replaced by -CH=CH-, -O-, -COO- or -OCO-,
at least one other of the radicals R¹, R², R³ or R⁴ is alkyl having 10 - 30 C atoms, wherein one or 2 non-adjacent -CH₂- groups can also be replaced by -HC=CH- and/or -0-, and
the other two radicals, in each case independently of one another, are halogen or alkyl or alkoxy having 1 - 30 C atoms, wherein one or 2 non-adjacent -CH₂- groups can also be replaced by -CH=CH, -O-, -CO-, -COO- or -OCO-.

2. Pearl lustre pigments according to Claim 1, characterized in that they have a titanium dioxide coat.

3. Pearl lustre pigments according to Claim 1, characterized in that the proportion by mass of the silane, relative to the surface area of the pigment, is between 0.0001 g/m² and 0.1 g/m².

4. Plastics system containing pearl lustre pigments coated with silanes of the formula I for inhibition of yellowing.

5. Process for the preparation of pearl lustre pigments coated with silanes of the formula I, characterized in that the inorganic pearl lustre pigment is mixed with one or more silanes of the formula I without solvent addition or other additives.

6. Use of pearl lustre pigments which are coated with silanes of the formula I for inhibition of yellowing in plastics.

## Revendications

1. Pigments nacrés qui sont recouverts d'un silane de formule I
SiR¹R²R³R⁴ I
dans laquelle
au moins un des radicaux R¹, R², R³ ou R⁴ représente un halogène ou un alcoxy ayant de 1 à 20 atomes de carbone, où encore un ou deux groupes -CH₂- non voisins peuvent être remplacés par -CH=CH-, -O-, -COO- ou -OCO-,
au moins un autre des radicaux R¹, R², R³ ou R⁴ représente un alkyle ayant de 10 à 30 atomes de carbone, où également un ou deux groupes -CH₂- non voisins peuvent être remplacés par -HC=CH- et/ou -O-, et
les deux autres radicaux représentent chacun indépendamment l'un de l'autre un halogène ou un alkyle ou alcoxy ayant de 1 à 30 atomes de carbone, où également un ou deux groupes -CH₂- non voisins peuvent être remplacés par -CH=CH-, -O-, -CO-, -COO- ou -OCO-.

2. Pigments nacrés selon la revendication 1, caractérisés en ce qu'ils présentent une couche de dioxyde de titane.

3. Pigments nacrés selon la revendication 1, caractérisés en ce que la proportion massique de silane par rapport à la surface du pigment se situe entre 0,0001 g/m² et 0,1 g/m².

4. Système synthétique contenant des pigments nacrés recouverts avec des silanes de formule I pour l'inhibition du jaunissement.

5. Procédé de préparation de pigments nacrés recouverts avec des silanes de formule I, caractérisé en ce qu'on mélange le pigment nacré inorganique avec un ou plusieurs silanes de formule I sans addition de solvant ni d'autres additifs.

6. Application de pigments nacrés qui sont recouverts de silanes de formule I à l'inhibition du jaunissement dans les matières synthétiques.
